# EUROPEAN PATENT APPLICATION

(11) **EP 4 258 800 A1**
(43) Date of publication of application: **11.10.2023**
(21) Application number: 20964487.1
(22) Date of filing: 07.12.2020
(51) Int. Cl.: H04W 76/10, H04W 76/19

(54) **CONNECTION ESTABLISHMENT METHOD AND APPARATUS**

(71) Applicant: Beijing Xiaomi Mobile Software Co., Ltd., Beijing 100085 (CN)
(72) Inventor: YANG, Xing, Beijing 100085 (CN)
(74) Representative: dompatent von Kreisler Selting Werner - Partnerschaft von Patent- und Rechtsanwälten mbB
(86) International application number: PCT/CN2020/134352
(87) International publication number: WO 2022/120540

(57) **Abstract**

The present disclosure relates to a connection establishment method and apparatus. The connection establishment method comprises: in response to receiving connection-related information of a remote device, determining, according to the connection-related information, a reason for a relay device performing connection establishment or connection recovery with a base station, wherein the connection-related information is used for indicating a connection request of the remote device. By means of the present disclosure, a base station can accurately determine, according to a reason for a relay device performing connection establishment or connection recovery, a reason for a remote device performing a communication operation, which is conducive to the base station accurately making a decision of allowing the relay device to perform connection establishment or connection recovery, or a decision of refusing to allow the relay device to perform connection establishment or connection recovery.

## Description

### TECHNICAL FIELD

The disclosure relates to the field of communication technologies, and in particular, to a method for connection establishment, an apparatus for connection establishment, an electronic device and a computer-readable storage medium.

### BACKGROUND

A terminal may perform an operation such as a connection establishment, a connection resumption or a connection re-establishment by sending a request to a base station. A reason for the operation may be carried in the request. The base station may allow the operation performed by the terminal or reject the operation performed by the terminal based on the reason.

In some scenarios, when the terminal communicates with the base station, the terminal may not directly establish the communication connection with the base station but communicate with the base station through a relay device. In this case, the terminal may be called a remote device.

Since the remote device does not directly communicate with the base station, the remote device does not send the request to the base station but sends the request to the relay device when the remote device performs the operation such as the connection establishment, the connection resumption or the connection re-establishment. For supporting the communication between the remote device and the base station, the relay device sends the request to the base station to perform the operation such as the connection establishment or the connection resumption with the base station.

In this case, based on the current relay communication architecture, for the relay device, the reason for performing by the remote device the communication operation is invisible. Therefore, although the relay device may carry the reason in the request sent to the base station, this reason may not be the same as the reason carried in the request sent by the remote device to the relay device, which may cause that the base station fails to accurately determine the reason for performing by the remote device the connection establishment, the connection resumption, the connection re-establishment or other operations.

### SUMMARY

In view of this, embodiments of the disclosure provide a method for connection establishment, an apparatus for connection establishment, an electronic device and a computer-readable storage medium, to solve technical problems in the related art.

According to a first aspect of embodiments of the disclosure, a method for connection establishment is provided, which is applicable to a relay device. The method includes the following.

In response to receiving connection-related information of a remote device, a reason for performing a connection establishment or a connection resumption with a base station by the relay device is determined according to the connection-related information, in which the connection-related information is configured to indicate a connection request of the remote device.

According to a second aspect of embodiments of the disclosure, a method for connection establishment is provided, which is applicable to a remote device. The method includes the following.

In response to communicating with a base station through a relay device, connection-related information is sent to the relay device, in which the connection-related information is configured to indicate a connection request of the remote device.

According to a third aspect of embodiments of the disclosure, an apparatus for connection establishment is provided, which is applicable to a relay device. The apparatus includes a reason determining module.

The reason determining module is configured to, in response to receiving connection-related information of a remote device, determine a reason for performing a connection establishment or a connection resumption with a base station by the relay device according to the connection-related information, in which the connection-related information is configured to indicate a connection request of the remote device.

According to a fourth aspect of embodiments of the disclosure, an apparatus for connection establishment is provided, which is applicable to a remote device. The apparatus includes a reason sending module.

The reason sending module is configured to, in response to communicating with a base station through a relay device, send connection-related information to the relay device, in which the connection-related information is configured to indicate a connection request of the remote device.

According to a fifth aspect of embodiments of the disclosure, an electronic device is provided. The electronic device includes:
a processor; and
a memory for storing instructions executable by the processor.

The processor is configured to perform the method for connection establishment applicable to the remote device and/or the method for connection establishment applicable to the relay device.

According to a sixth aspect of embodiments of the disclosure, a computer-readable storage medium is provided. The computer-readable storage medium has stored therein a computer program. When the computer program is executed by a processor, actions in the method for connection establishment applicable to the remote device and/or in the method for connection establishment applicable to the relay device are realized.

According to the embodiments of the disclosure, after receiving the connection-related information sent by the remote device when the communication operation is required by the remote device, the relay device may trigger the connection establishment or the connection resumption and determine the reason for the connection establishment or the connection resumption that needs to be performed by itself according to the connection-related information of the remote device. Since the connection-related information may indicate the connection request of the remote device and the connection request corresponds to the communication operation that the remote device needs to perform, the reason for performing by the relay device the connection establishment or the connection resumption corresponds to the reason for performing by the remote device the communication operation. For example, the reason carried in the connection establishment request or the connection resumption request corresponds to the reason of the connection-related information for performing by the remote device the communication operation. Therefore, the base station may accurately determine the reason for performing by the remote device the communication operation according to the reason for performing by the relay device the connection establishment or connection resumption, which is helpful for the base station to accurately make a decision to allow the relay device to perform the connection establishment or the connection resumption or reject the relay device to perform the connection establishment or the connection resumption.

### BRIEF DESCRIPTION OF THE DRAWINGS

In order to more clearly illustrate technical solutions in embodiments of the disclosure, a brief description of drawings used in descriptions of the embodiments is given below. Obviously, the drawings in the following descriptions are only some embodiments of the disclosure, and for a person skilled in the art, other drawings may be obtained according to these drawings without creative labor.
FIG. 1 is a schematic flowchart of a method for connection establishment, according to some embodiments of the disclosure.
FIG. 2 is a schematic flowchart of another method for connection establishment, according to some embodiments of the disclosure.
FIG. 3 is a schematic flowchart of yet another method for connection establishment, according to some embodiments of the disclosure.
FIG. 4 is a schematic flowchart of yet another method for connection establishment, according to some embodiments of the disclosure.
FIG. 5 is a schematic flowchart of yet another method for connection establishment, according to some embodiments of the disclosure.
FIG. 6 is a schematic flowchart of yet another method for connection establishment, according to some embodiments of the disclosure.
FIG. 7 is a schematic flowchart of yet another method for connection establishment, according to some embodiments of the disclosure.
FIG. 8 is a schematic flowchart of a method for connection establishment, according to some embodiments of the disclosure.
FIG. 9 is a schematic flowchart of another method for connection establishment, according to some embodiments of the disclosure.
FIG. 10 is a schematic block diagram of an apparatus for connection establishment, according to some embodiments of the disclosure.
FIG. 11 is a schematic block diagram of another apparatus for connection establishment, according to some embodiments of the disclosure.
FIG. 12 is a schematic block diagram of an apparatus for connection establishment, according to some embodiments of the disclosure.
FIG. 13 is a schematic block diagram of a device for determining a reason and/or sending a reason, according to some embodiments of the disclosure.

### DETAILED DESCRIPTION

Technical solutions in embodiments of the disclosure will be clearly and completely described below with reference to the accompanying drawings in the embodiments of the disclosure. Obviously, the described embodiments are only a part of the embodiments of the disclosure, but not all of the embodiments. Based on the embodiments in the disclosure, all other embodiments obtained by a person skilled in the art without creative efforts shall fall within the protection scope of the disclosure.

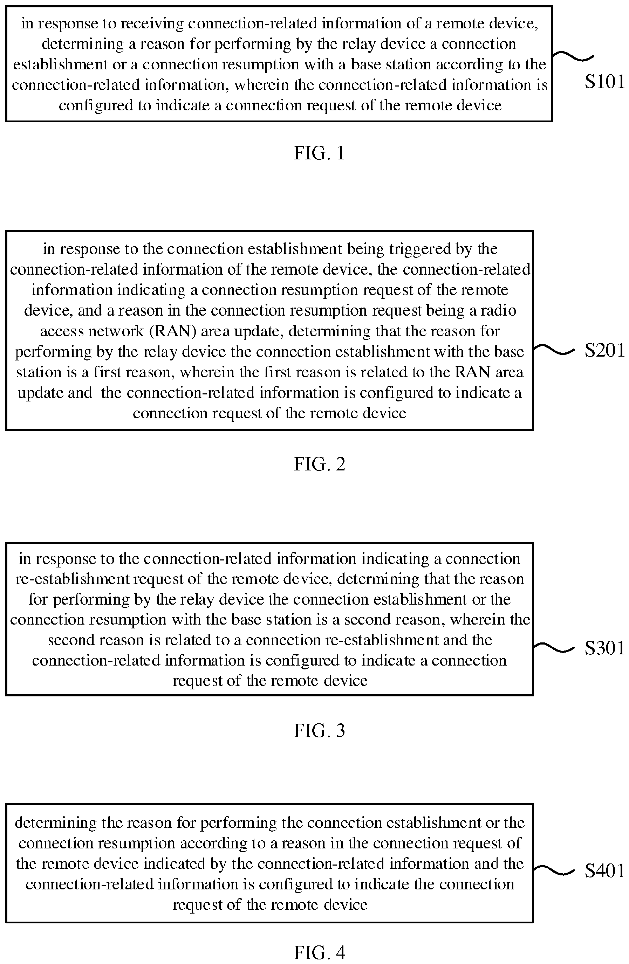

FIG. 1 is a schematic flowchart of a method for connection establishment, according to some embodiments of the disclosure. The method for connection establishment in some embodiments may be applicable to a terminal. The terminal may be a relay device capable of acting a relay function. The terminal includes but is not limited to a mobile phone, a tablet computer, a wearable device, a sensor, an Internet of Things (IoT) device or other electronic device. The terminal may communicate with a base station as a user equipment (UE). The terminal may also act as the relay device to provide the relay function for a remote device and the base station and send information from the remote device to the base station. The base station includes but is not limited to a 4G (fourth generation) base station, a 5G (fifth generation) base station or a 6G (sixth generation) base station. In some embodiments, the remote device is a remote device to which the method for connection establishment described in any of the following embodiments is applicable.

As illustrated in FIG. 1, the method for connection establishment may include the following step.

In step S101, in response to receiving connection-related information of a remote device, a reason for performing a connection establishment or a connection resumption with a base station by the relay device is determined according to the connection-related information, in which the connection-related information is configured to indicate a connection request of the remote device.

In some embodiments, when the relay device is in a non-connected state, the remote device may trigger the relay device to perform the connection establishment or the connection resumption with the base station by sending the connection-related information to the relay device, in which the connection-related information may indicate the connection request of the remote device. For example, when the relay device is in an idle state, it may be triggered to perform the connection establishment, and when the relay device is in an inactive state, it may be triggered to perform the connection resumption.

In some embodiments, the connection request includes at least one of:
a connection establishment request, a connection re-establishment request or a connection resumption request.

In some embodiments, the relay device and the remote device may communicate with each other through a sidelink.

In some embodiments, the remote device may send the connection-related information to the relay device based on the communication operation that needs to be performed. The connection-related information may be varied with the communication operation that needs to be performed, and there may be many reasons in the connection request indicated by the connection-related information.

For example, the remote device needs to perform the connection establishment, the connection-related information may indicate the connection establishment request, and the connection establishment request may carry the reason for the connection establishment.

In some embodiments, the reason in the connection request includes but is not limited to:
emergency, high-priority access (highPriorityAccess), user-initiated data (mo-Data), user-initiated voice call (mo-VoiceCall), user-initiated video call (mo-VideoCall), user-initiated signalling (mo-Signalling), paging (mt-Access) or the like.

If the base station may directly receive the connection request such as the above connection establishment request corresponding to the communication operation of the remote device, it may accurately determine the reason for performing by the remote device the communication operation and accurately make a decision to allow the remote device to perform the communication operation or make a decision to reject the remote device to perform the communication operation.

However, since the remote device communicates with the base station through the relay device, the remote device sends the request corresponding to the communication operation to the relay device when it needs to perform the communication operation, the base station may not directly receive the request corresponding to the communication operation from the remote device. In the related art, the reason for performing by the remote device the communication operation is invisible to the relay device.

After receiving the request corresponding to the communication operation from the remote device, the relay device may perform the connection establishment or the connection resumption with the base station and send the connection establishment request or the connection resumption request to the base station. Since the relay device may not determine the reason for the communication operation of the remote device, the relay device may set the reason for the connection establishment or the reason for the connection resumption according to its own implementation, which may cause that the reason carried in the connection establishment request or the connection resumption request is different from the reason for performing by the remote device the communication operation, so that the base station may not accurately determine the reason for performing by the remote device the communication operation and further erroneously make a decision to allow the connection establishment or the connection resumption of the relay device or erroneously make a decision to reject the connection establishment or the connection resumption of the relay device.

According to the embodiments of the disclosure, after receiving the connection-related information sent by the remote device when the communication operation is required by the remote device, the relay device may trigger the connection establishment or the connection resumption and determine the reason for the connection establishment or the connection resumption that needs to be performed by itself according to the connection-related information of the remote device. Since the connection-related information may indicate the connection request of the remote device and the connection request corresponds to the communication operation that the remote device needs to perform, the reason for performing by the relay device the connection establishment or the connection resumption corresponds to the reason for performing by the remote device the communication operation. For example, the reason carried in the connection establishment request or the connection resumption request corresponds to the reason of the connection-related information for performing by the remote device the communication operation. Therefore, the base station may accurately determine the reason for performing by the remote device the communication operation according to the reason for performing by the relay device the connection establishment or connection resumption, which is helpful for the base station to accurately make a decision to allow the relay device to perform the connection establishment or the connection resumption or reject the relay device to perform the connection establishment or the connection resumption.

The embodiments of the disclosure are described below based on examples.

For example, the base station may set priorities for various reasons. In some scenarios, the communication operation corresponding to the reason with the higher priority is decided to be allowed and the communication operation corresponding to the reason with the lower priority is decided to be rejected.

Taking emergency, user-initiated data, user-initiated signalling and paging as an example, the priority from high to low is emergency, user-initiated signalling, user-initiated data and paging.

In some scenarios, the base station may make a decision to allow the communication operation corresponding to the two reasons of emergency and user-initiated signalling and make a decision to reject the communication operation corresponding to the two reasons of user-initiated data and paging.

In order to communicate with the base station through the relay device, the remote device needs to perform the connection resumption and send the connection-related information to the relay device. The connection-related information may indicate the connection resumption request. The connection resumption request may carry the reason for the connection resumption being user-initiated signalling.

In the related art, the reason for the connection resumption carried in the connection resumption request sent by the remote device to the relay device is invisible to the relay device. The relay device may initiate the connection establishment operation or the connection resumption operation and determine the reason for the connection establishment operation or the connection resumption operation according to itself situations. For example, the connection establishment operation is initiated, the connection establishment request is sent to the base station, and the connection establishment request carries the reason for the connection establishment being paging.

In the related art, after receiving the connection establishment request sent by the relay device, the base station may use the reason of paging as the reason for the connection establishment of the relay device, so as to make a rejection decision, that is, to reject the connection establishment of the relay device. The remote device may restore the connection through the relay device, which may cause the remote device to fail to communicate with the base station successfully.

According to the embodiments of the disclosure, the relay device may determine that the remote device performs the connection resumption according to the connection-related information and the reason for the connection resumption is user-initiated signalling, so it may be determined that the reason for performing by the relay device the connection establishment is user-initiated signalling, and the reason for the connection establishment carried in the connection establishment request sent to the base station is user-initiated signalling.

In the embodiments according to the disclosure, after receiving the connection establishment request sent by the relay device, the base station may use user-initiated signalling as the reason for the establishment of the relay device, so as to make a decision to allow, that is, to allow the relay device to perform the connection establishment. The remote device may restore the connection through the relay device, thereby ensuring that the remote device may successfully communicate with the base station.

FIG. 2 is a schematic flowchart of another method for connection establishment, according to some embodiments of the disclosure. As illustrated in FIG. 2, in some embodiments of the disclosure, determining the reason for performing the connection establishment or the connection resumption with the base station by the relay device according to the connection-related information includes the following.

In step S201, in response to the connection establishment being triggered by the connection-related information of the remote device, the connection-related information indicating a connection resumption request of the remote device, and a reason in the connection resumption request being a radio access network (RAN) area update, it is determined that the reason for performing the connection establishment with the base station by the relay device is a first reason, in which the first reason is related to the RAN area update.

In some embodiments, when the remote device is in an inactive state and the relay device is in an idle state, in order to communicate with the base station, the communication operation performed by the remote device may be the connection resumption, so as to enter the connected state from the inactive state. The remote device may send the connection-related information to the relay device, in which the connection-related information is configured to indicate the connection resumption request of the remote device, to trigger the relay device to perform the connection establishment and send the connection establishment request to the base station.

The reason for the connection resumption may be partially the same as the reason for the connection establishment, such as the above-mentioned emergency, high-priority access, user-initiated data, user-initiated voice call, user-initiated video call, user-initiated signalling, paging and the like. But the difference is that the reason for the connection resumption may also be the RAN area update, which is a unique reason for the connection resumption, and the reason for the connection establishment may not be the RAN area update.

Since the reason for the connection establishment of the relay device may not be the RAN area update and the reason for the connection resumption of the remote device is the RAN area update, in some embodiments, the reason for the connection establishment of the relay device may be set as the first reason and the first reason may be related to the RAN area update. Accordingly, although the relay device may not directly set the reason for the connection establishment as the RAN area update when performing the connection establishment, it may be set as the reason related to the RAN area update, so that the base station may relatively accurately determine that the communication operation that the remote device needs to perform is the connection resumption and the reason for the connection resumption is the RAN area update.

In some embodiments, the first reason is a user-initiated signalling. The remote device performs the connection resumption based on the reason of RAN area update. After the connection resumption, the communication with the base station may mainly be the user-initiated signalling. Therefore, even if the relay device may not set the reason for the connection establishment to the RAN area update, it may also be possible to set the reason for the connection establishment as the user-initiated signalling related to the subsequent communication of the RAN area update, so that the base station may determine the reason for performing by the remote device the connection resumption to a certain extent according to the connection establishment request sent by the relay device.

FIG. 3 is a schematic flowchart of yet another method for connection establishment, according to some embodiments of the disclosure. As illustrated in FIG. 3, in some embodiments of the disclosure, determining the reason for performing the connection establishment or the connection resumption with the base station by the relay device according to the connection-related information includes the following.

In step S301, in response to the connection-related information indicating a connection re-establishment request of the remote device, it is determined that the reason for by the relay device performing the connection establishment or the connection resumption with the base station is a second reason, in which the second reason is related to a connection re-establishment.

In some embodiments, when the remote device is in a connected state but the communication with the base station is interrupted for some reasons, and the relay device is in a non-connected state, the communication operation performed by the remote device to communicate with the base station may be the connection re-establishment, to keep to continue to communicate with the base station in the connected state. The remote device may send the connection-related information to the relay device, the connection-related information indicates the connection re-establishment request of the remote device, and the relay device is triggered to perform the connection establishment or the connection resumption and send the connection establishment request or the connection resumption request to the base station.

Since the connection re-establishment is performed in the connected state, and the connection establishment or the connection resumption is performed in the disconnected state, the reason for the connection re-establishment is basically different from the reason for the connection establishment or the connection resumption, that is, during the connection establishment or the connection resumption performed by the relay device, the reason carried in the connection establishment request or the connection resumption request may not be the reason related to the connection re-establishment.

Since the reason for performing by the relay device the connection establishment or the connection resumption may not be related to the reason for the connection re-establishment, in some embodiments, the reason for performing by the relay device the connection re-establishment may be set as the second reason, and the first reason is related to the connection re-establishment. Accordingly, although the relay device may not directly set the reason for the connection establishment or the connection resumption as the reason related to the connection re-establishment when the connection establishment is performed, it may be set as the reason related to the connection re-establishment, so that the base station may relatively accurately determine the communication operation reason performed by the remote device being the connection re-establishment and the reason for the connection re-establishment.

In some embodiments, the second reason is user-initiated data. After the remote device performs the connection re-establishment, the communication with the base station may mainly be the user-initiated data. Therefore, even if the relay device may not set the reason for the connection establishment or the connection resumption as the reason for the connection reestablishment, it may be able to set the reason for the connection reestablishment or the connection resumption as the user-initiated data related to the subsequent communication of the connection re-establishment, so that the base station may determine the reason for performing by the remote device the connection re-establishment to a certain extent according to the connection establishment request or the connection resumption request sent by the relay device.

In some embodiments, the second reason is re-establishment. When the relay device is triggered by the communication operation of the remote device to perform the connection establishment or the connection resumption, although the reason for the connection establishment or the connection resumption may not be set as the reason for the connection re-establishment, it may be determined that the remote device needs re-establishment, so that the second reason is set to re-establishment. Therefore, the base station may determine that the relay device performs the connection establishment or the connection resumption because the remote device needs the connection re-establishment.

The reason of re-establishment is a newly set reason, which is different from the existing emergency, high-priority access, user-initiated data, user-initiated voice call, user-initiated video call, user-initiated signalling, paging or the like. For the reason of re-establishment, the base station may make a decision to allow or reject as needed for the connection-related information for the reason.

It may be determined that the remote device needs to communicate with the base station through the relay device, then it may be determined that the reason for the connection establishment or connection resumption triggered is relay. The reason of relay is a newly set reason, which is different from the existing emergency, high-priority access, user-initiated data, user-initiated voice call, user-initiated video call, user-initiated signalling, paging or the like. For the reason of relay, the base station may make a decision to allow or reject as needed for the connection-related information for the reason.

FIG. 4 is a schematic flowchart of yet another method for connection establishment, according to some embodiments of the disclosure. As illustrated in FIG. 4, in some embodiments of the disclosure, determining the reason for by the relay device performing the connection establishment or the connection resumption with the base station according to the connection-related information includes the following.

In step S401, the reason for performing the connection establishment or the connection resumption is determined according to a reason in the connection request of the remote device indicated by the connection-related information.

In some embodiments, the reason for the communication operation initiated by the remote device may be determined. For example, the remote device may send the connection-related information to the relay device, and the connection-related information indicates the connection request of the remote device. The reason for the communication operation initiated by the remote device may be carried in the connection request. The reason for performing by the relay device the connection establishment or the connection resumption may be directly determined according to the reason for the communication operation initiated by the remote device.

In some embodiments, determining the reason for performing the connection establishment or the connection resumption with the base station by the relay device according to the connection-related information includes:
determining the reason in the connection request of the remote device indicated by the connection-related information as the reason for performing by the relay device the connection establishment or the connection resumption.

In some embodiments, the reason in the connection request of the remote device, indicated by the connection-related information and initiated by the remote device, that is, the reason for performing by the remote device the communication operation, may be used as the reason for performing by the relay device the connection establishment or the connection resumption. Therefore, when the relay device sends the connection establishment request or the connection resumption request to the base station, it may carry the reason for the communication operation, so that the base station may make a decision for the connection establishment or the connection resumption of the relay device according to the reason for the communication operation of the remote device.

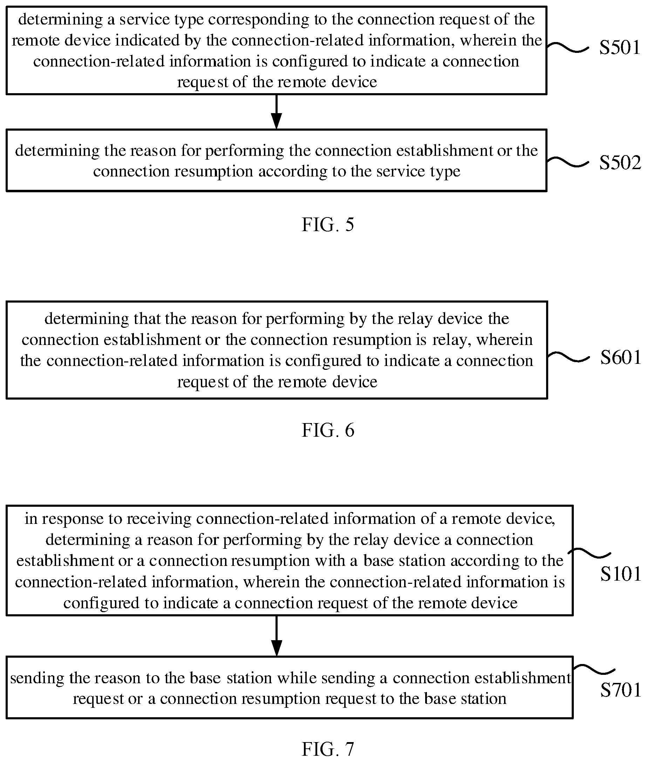

FIG. 5 is a schematic flowchart of yet another method for connection establishment, according to some embodiments of the disclosure. As illustrated in FIG. 5, in some embodiments of the disclosure, determining the reason for by the relay device performing the connection establishment or the connection resumption with the base station according to the connection-related information includes the following steps.

In step S501, a service type corresponding to a connection request of the remote device indicated by the connection-related information is determined.

In step S502, the reason for performing the connection establishment or the connection resumption is determined according to the service type.

In some embodiments, after receiving the connection-related information sent by the remote device, the relay device may determine the service type corresponding to the connection request of the remote device indicated by the connection-related information of the remote device, that is, the service type corresponding to the communication operation performed by the remote device. The service type includes but is not limited to emergency call, data, voice, etc. The reason for the connection establishment or the connection resumption may be determined according to the service type. For example, if the service type is emergency call, the determined reason may be emergency; for example, if the service type is data, the determined reason may be user-initiated data; and for example, if the service type is voice, the determined reason may be user-initiated call.

Accordingly, even if the remote device does not send the connection request for the communication operation to the relay device or the connection request does not carry the reason for the communication operation, the relay device may determine the reason for the connection establishment or the connection resumption.

It should be noted that, even if the connection request for the communication operation sent by the remote device to the relay device carries the reason for the communication operation, the relay device may also determine the reason for the connection establishment or the connection resumption according to the service type. Whether to determine the reason for the connection establishment or the connection resumption according to the reason for performing by the remote device the communication operation or to determine the reason for the connection establishment or connection resumption according to the service type, may be determined according to the implementation of the relay device.

FIG. 6 is a schematic flowchart of yet another method for connection establishment, according to some embodiments of the disclosure. As illustrated in FIG. 6, in some embodiments of the disclosure, determining the reason for performing the connection establishment or the connection resumption with the base station by the relay device according to the connection-related information includes the following step.

In step S601, it is determined that the reason for performing by the relay device the connection establishment or the connection resumption is relay.

In some embodiments, after receiving the connection-related information sent by the remote device, the relay device may trigger the connection establishment or the connection resumption and may also determine that the remote device needs to communicate with the base station through the relay device, and then it may be determined that the reason for the connection establishment or the connection resumption is relay. Therefore, the base station may determine that the relay device performs the connection establishment or the connection resumption in order to provide the relay for the remote device.

The reason of relay is a newly set reason, which is different from the existing emergency, high-priority access, user-initiated data, user-initiated voice call, user-initiated video call, user-initiated signalling, paging or the like. For the reason of relay, the base station may determine whether to allow or reject the communication operation for the reason as needed.

In some embodiments, determining that the reason for performing by the relay device the connection establishment or the connection resumption is the relay includes:
determining that the reason for performing by the relay device the connection establishment or the connection resumption is relay for the remote device.

In some embodiments, the reason for the connection establishment or the connection resumption of the relay device may specifically be determined to be the relay for the remote device, so that the base station may determine that the relay device provides the relay for the remote device. Therefore, the base station may determine whether to allow the connection establishment or the connection resumption of the relay device according to the remote device. When the relay device provides the relay for the remote device, the connection establishment or the connection resumption of the relay device is allowed; and when the relay device does not provide the relay for the remote device, the connection establishment or the connection resumption of the relay device is not allowed.

FIG. 7 is a schematic flowchart of yet another method for connection establishment, according to some embodiments of the disclosure. As illustrated in FIG. 7, in some embodiments of the disclosure, the method for connection establishment may further include the following.

In step S701, the reason is sent to the base station while sending a connection establishment request or a connection resumption request to the base station.

In some embodiments, the relay device may send the reason to the base station when sending the connection establishment request or the connection resumption request to the base station, for example, the reason is carried in the connection establishment request or the connection resumption request and sent to the base station, so that the base station may make a decision on the connection establishment or the connection resumption of the relay device depending on the reason for the communication operation of the remote device.

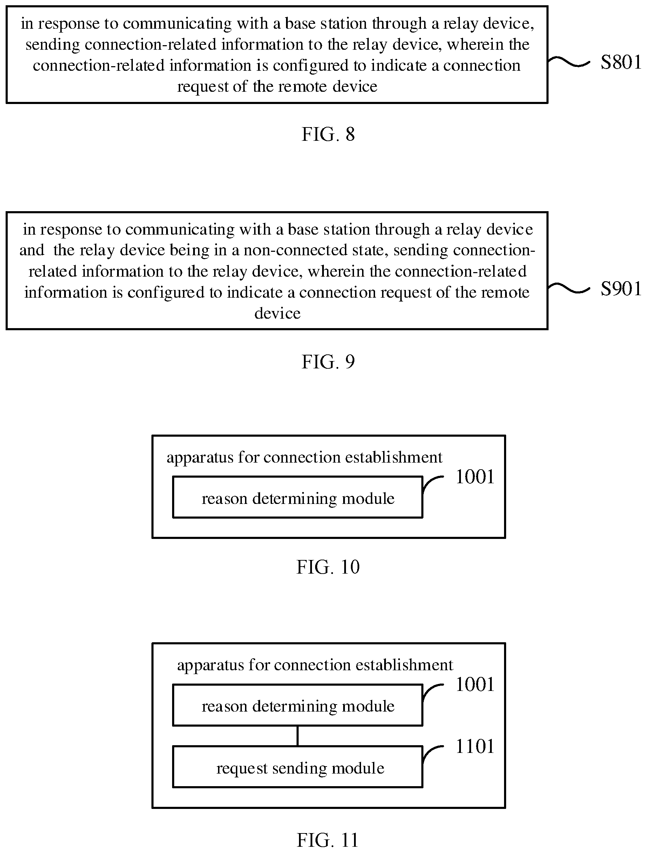

FIG. 8 is a schematic flowchart of a method for connection establishment, according to some embodiments of the disclosure. The apparatus for connection establishment in some embodiments may be applicable to a terminal. The terminal as a UE may communicate with a base station or as a remote device may communicate with the base station through a relay device. The terminal includes but is not limited to a mobile phone, a tablet computer, a wearable device, a sensor, an IoT device or other electronic device. The base station includes but is not limited to a 4G base station, a 5G base station or a 6G base station. In some embodiments, the relay device is a relay device to which the method for connection establishment described in any of the foregoing embodiments is applicable.

As illustrated in FIG. 8, determining and sending of the reason may include the following step.

In step S801, in response to communicating with a base station through a relay device, connection-related information is sent to the relay device, in which the connection-related information is configured to indicate a connection request of the remote device.

In some embodiments, the relay device and the remote device may communicate with each other through a sidelink.

According to the embodiments of the disclosure, when the remote device needs to perform the communication operation with the base station through the relay device, the connection-related information may be sent by the remote device to the relay device. On the one hand, the relay device may be triggered to perform the connection establishment or the connection resumption operation. On the other hand, since the connection-related information may indicate the connection request of the remote device and the connection request corresponds to the communication operation that the remote device needs to perform, the relay device may determine the reason for performing by the remote device the communication operation, so that the relay device determines the reason for the connection establishment or the connection resumption that the relay device itself needs to perform according to the communication operation of the remote device. Therefore, the reason for performing by the relay device the connection establishment or the connection resumption corresponds to the reason for performing by the remote device the communication operation. For example, the reason carried in the connection establishment request or the connection resumption request corresponds to the reason for performing by the remote device the communication operation, so that the base station may accurately determine the reason for performing by the remote device the communication operation according to the reason for performing by the relay device the connection establishment or the connection resumption, which is helpful for the base station to accurately make a decision to allow the relay device to perform the connection establishment or the connection resumption or make a decision to reject the relay device to perform the connection establishment or the connection resumption.

In some embodiments, the connection request includes at least one of:
a connection establishment request, a connection re-establishment request or a connection resumption request.

FIG. 9 is a schematic flowchart of another method for connection establishment, according to some embodiments of the disclosure. As illustrated in FIG. 9, in some embodiments of the disclosure, sending the connection-related information to the relay device includes the following.

In step 901, in response to the relay device being in a non-connected state, the connection-related information is sent to the relay device.

In some embodiments, the remote device may first determine whether the relay device is in the non-connected state. For example, the relay device may broadcast that it is in the non-connected state or send a message to the remote device through a sidelink to inform the remote device that the relay device is in the non-connected state.

When the relay device is in the non-connected state, the connection establishment operation or the connection resumption operation is triggered, so that the connection-related information may be sent to the relay device in this case. When the relay device is in the connected state, the relay device may not be triggered to perform the connection establishment operation or the connection resumption operation, and the connection-related information may not be sent to the base station through the connection establishment request or the connection resumption request, so that in this case, it may not send the reason of the connection-related information to the relay device to reduce the occupation of communication resources.

Corresponding to the foregoing embodiments of the methods for connection establishment, the disclosure also provides some embodiments of apparatuses for connection establishment.

FIG. 10 is a schematic block diagram of an apparatus for connection establishment, according to some embodiments of the disclosure. The apparatus for connection establishment in some embodiments may be applicable to a terminal. The terminal may be a relay device capable of acting a relay function. The terminal includes but is not limited to a mobile phone, a tablet computer, a wearable device, a sensor, an IoT device or other electronic device. The terminal may communicate with a base station as a UE. The terminal may also act as the relay device to provide the relay function for a remote device and the base station and send information from the remote device to the base station. The base station includes but is not limited to a 4G base station, a 5G base station or a 6G base station. In some embodiments, the remote device is a remote device to which the method for connection establishment described in any of the following embodiments is applicable.

As illustrated in FIG. 10, the apparatus for connection establishment may include a reason determining module 1001.

The reason determining module 1001 is configured to, in response to receiving connection-related information of a remote device, determine a reason for performing a connection establishment or a connection resumption with a base station by the relay device according to the connection-related information, in which the connection-related information is configured to indicate a connection request of the remote device.

In some embodiments, the connection request includes at least one of:
a connection establishment request, a connection re-establishment request or a connection resumption request.

In some embodiments, the reason determining module is configured to, in response to the connection establishment being triggered by the connection-related information of the remote device, the connection-related information indicating a connection resumption request of the remote device, and a reason in the connection resumption request being a radio access network (RAN) area update, determine that the reason for performing the connection establishment by the relay device with the base station is a first reason, in which the first reason is related to the RAN area update.

In some embodiments, the first reason is a user-initiated signalling.

In some embodiments, the reason determining module is configured to, in response to the connection-related information indicating a connection re-establishment request of the remote device, determine that the reason for performing the connection establishment or the connection resumption by the relay device with the base station is a second reason, in which the second reason is related to a connection re-establishment.

In some embodiments, the second reason is user-initiated data.

In some embodiments, the second reason is re-establishment.

In some embodiments, the reason determining module is configured to determine the reason for performing the connection establishment or the connection resumption according to a reason in a connection request of the remote device indicated by the connection-related information.

In some embodiments, the reason determining module is configured to determine the reason in the connection request of the remote device indicated by the connection-related information as the reason for performing the connection establishment or the connection resumption by the relay device.

In some embodiments, the reason determining module is configured to determine a service type corresponding to a connection request of the remote device indicated by the connection-related information; and determine the reason for performing the connection establishment or the connection resumption according to the service type.

In some embodiments, the reason determining module is configured to determine that the reason for performing the connection establishment or the connection resumption by the relay device is relay.

In some embodiments, the reason determining module is configured to determine that the reason for performing the connection establishment or the connection resumption by the relay device is relay for the remote device.

FIG. 11 is a schematic block diagram of another apparatus for connection establishment, according to some embodiments of the disclosure. As illustrated in FIG. 11, the apparatus further includes a request sending module 1101.

The request sending module 1101 is configured to send the reason to the base station while sending a connection establishment request or a connection resumption request to the base station.

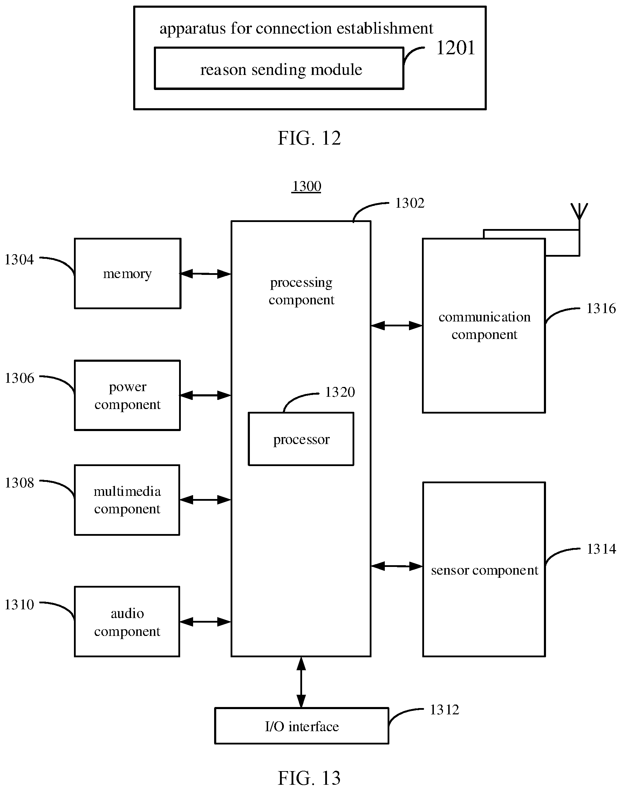

FIG. 12 is a schematic block diagram of an apparatus for connection establishment, according to some embodiments of the disclosure. The apparatus for connection establishment in some embodiments may be applicable to a terminal. The terminal as a UE may communicate with a base station or as a remote device may communicate with the base station through a relay device. The terminal includes but is not limited to a mobile phone, a tablet computer, a wearable device, a sensor, an IoT device or other electronic device. The base station includes but is not limited to a 4G base station, a 5G base station or a 6G base station. In some embodiments, the relay device is a relay device to which the method for connection establishment described in any of the foregoing embodiments is applicable.

As illustrated in FIG. 12, the apparatus for connection establishment may include a reason sending module 1201.

The reason sending module 1201 is configured to, in response to communicating with a base station through a relay device, send connection-related information to the relay device, in which the connection-related information is configured to indicate a connection request of the remote device.

Optionally, the reason sending module is configured to, in response to the relay device being in a non-connected state, send the connection-related information to the relay device.

Optionally, the connection-related request includes at least one of:
a connection establishment request, a connection re-establishment request or a connection resumption request.

With respect to the apparatuses in the above embodiments, the specific manners for performing operations for individual modules therein have been described in detail in the embodiments regarding the methods, which will not be elaborated herein.

For the apparatus embodiments, since they basically correspond to the method embodiments, reference may be made to the partial descriptions of the method embodiments for related parts. The apparatus embodiments described above are only illustrative, in which modules described as separate components may or may not be physically separated, and components displayed as modules may or may not be physical modules, that is, they may be located in one place or distributed on multiple network modules. Some or all of the modules may be selected according to actual needs to achieve purposes of solutions in embodiments. A person skilled in the art may understand and implement it without creative effort.

Embodiments of the disclosure also provide an electronic device, including:
a processor; and
a memory for storing instructions executable by the processor.

The processor is configured to perform the method for connection establishment applicable to the remote device described in any one of the above embodiments, and/or the method for connection establishment applicable to the relay device described in any one of the above embodiments.

Embodiments of the disclosure also provide a computer-readable storage medium, on which a computer program is stored, and when the program is executed by a processor, the actions in the method for connection establishment applicable to the remote device described in any one of the above embodiments, and/or in the method for connection establishment applicable to the relay device described in any one of the above embodiments, are realized.

FIG. 13 is a schematic block diagram of a device 1300 for determining a reason and/or sending a reason, according to some embodiments of the disclosure. For example, the device 1300 may be a mobile phone, a computer, a digital broadcast terminal, a messaging device, a gaming console, a tablet, a medical device, exercise equipment, a personal digital assistant, and the like.

Referring to FIG. 13, the device 1300 may include one or more of the following components: a processing component 1302, a memory 1304, a power component 1306, a multimedia component 1308, an audio component 1310, an input/output (I/O) interface 1312, a sensor component 1314, and a communication component 1316.

The processing component 1302 typically controls overall operations of the device 1300, such as the operations associated with display, telephone calls, data communications, camera operations, and recording operations. The processing component 1302 may include one or more processors 1320 to execute instructions to perform all or part of the steps in the above described methods. Moreover, the processing component 1302 may include one or more modules which facilitate the interaction between the processing component 1302 and other components. For instance, the processing component 1302 may include a multimedia module to facilitate the interaction between the multimedia component 1308 and the processing component 1302.

The memory 1304 is configured to store various types of data to support the operation of the device 1300. Examples of such data include instructions for any applications or methods operated on the device 1300, contact data, phonebook data, messages, pictures, video, etc. The memory 1304 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1306 provides power to various components of the device 1300. The power component 1306 may include a power management system, one or more power sources, and any other components associated with the generation, management, and distribution of power in the device 1300.

The multimedia component 1308 includes a screen providing an output interface between the device 1300 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1308 includes a front camera and/or a rear camera. The front camera and the rear camera may receive an external multimedia datum while the device 1300 is in an operation mode, such as a photographing mode or a video mode. Each of the front camera and the rear camera may be a fixed optical lens system or have focus and optical zoom capability.

The audio component 1310 is configured to output and/or input audio signals. For example, the audio component 1310 includes a microphone ("MIC") configured to receive an external audio signal when the device 1300 is in an operation mode, such as a call mode, a recording mode, and a voice recognition mode. The received audio signal may be further stored in the memory 1304 or transmitted via the communication component 1316. In some embodiments, the audio component 1310 further includes a speaker to output audio signals.

The I/O interface 1312 provides an interface between the processing component 1302 and peripheral interface modules, such as a keyboard, a click wheel, buttons, and the like. The buttons may include, but are not limited to, a home button, a volume button, a starting button, and a locking button.

The sensor component 1314 includes one or more sensors to provide status assessments of various aspects of the device 1300. For instance, the sensor component 1314 may detect an open/closed status of the device 1300, relative positioning of components, e.g., the display and the keypad, of the device 1300, a change in position of the device 1300 or a component of the device 1300, a presence or absence of user contact with the device 1300, an orientation or an acceleration/deceleration of the device 1300, and a change in temperature of the device 1300. The sensor component 1314 may include a proximity sensor configured to detect the presence of nearby objects without any physical contact. The sensor component 1314 may also include a light sensor, such as a CMOS or CCD image sensor, for use in imaging applications. In some embodiments, the sensor component 1314 may also include an accelerometer sensor, a gyroscope sensor, a magnetic sensor, a pressure sensor, or a temperature sensor.

The communication component 1316 is configured to facilitate communication, wired or wirelessly, between the device 1300 and other devices. The device 1300 may access a wireless network based on a communication standard, such as Wi-Fi, second generation (2G) or third gengeration (3G), fourth gengeration (4G) Long Term Evolution (LTE), fifth generation (5G) new radio (NR), or a combination thereof. In some embodiments, the communication component 1316 receives a broadcast signal or broadcast associated information from an external broadcast management system via a broadcast channel. In some embodiments, the communication component 1316 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In some embodiments, the device 1300 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In some embodiments, there is also provided a non-transitory computer-readable storage medium including instructions, such as included in the memory 1304, executable by the processor 1320 in the device 1300, for performing the above-described methods. For example, the non-transitory computer-readable storage medium may be a ROM, a RAM, a CD-ROM, a magnetic tape, a floppy disc, an optical data storage device, and the like.

Other embodiments of the disclosure will be apparent to a person skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples be considered as exemplary only, with a true scope and spirit of the disclosure being indicated by the following claims.

It will be appreciated that the disclosure is not limited to the exact construction that has been described above and illustrated in the accompanying drawings, and that various modifications and changes may be made without departing from the scope thereof. It is intended that the scope of the disclosure only be limited by the appended claims.

It should be noted that, in the disclosure, relational terms such as first and second are used only to distinguish one entity or operation from another entity or operation, and do not necessarily require or imply any such actual relationship or sequence exists between these entities or operations. The terms "comprising", "including" or any other variation thereof are intended to encompass non-exclusive inclusion such that a process, method, article, or device including a list of elements includes not only those elements, but also other elements not expressly listed, or also include elements inherent to such the process, method, article, or device. Without further limitation, an element qualified by the phrase " including a..." does not preclude the presence of additional identical elements in the process, method, article, or device that includes the element.

The methods and apparatuses or devices provided by embodiments of the disclosure have been described in detail above, and specific examples are used to illustrate the principles and implementations of the disclosure. At the same time, for a person skilled in the art, according to the idea of the disclosure, there will be changes in the specific implementation and application scope. In summary, the content of this specification should not be construed as limiting the disclosure.

## Claims

1. A method for connection establishment, applicable to a relay device, the method comprising:
in response to receiving connection-related information of a remote device, determining a reason for performing a connection establishment or a connection resumption with a base station by the relay device according to the connection-related information, wherein the connection-related information is configured to indicate a connection request of the remote device.

2. The method as claimed in claim 1, wherein determining the reason for performing the connection establishment or the connection resumption with the base station by the relay device according to the connection-related information comprises:
in response to the connection establishment being triggered by the connection-related information of the remote device, the connection-related information indicating a connection resumption request of the remote device, and a reason in the connection resumption request being a radio access network (RAN) area update, determining that the reason for performing the connection establishment with the base station by the relay device is a first reason, wherein the first reason is related to the RAN area update.

3. The method as claimed in claim 2, wherein the first reason is a user-initiated signalling.

4. The method as claimed in claim 1, wherein determining the reason for performing the connection establishment or the connection resumption with the base station by the relay device according to the connection-related information comprises:
in response to the connection-related information indicating a connection re-establishment request of the remote device, determining that the reason for performing the connection establishment or the connection resumption with the base station by the relay device is a second reason, wherein the second reason is related to a connection re-establishment.

5. The method as claimed in claim 4, wherein the second reason is user-initiated data.

6. The method as claimed in claim 4, wherein the second reason is re-establishment.

7. The method as claimed in claim 1, wherein determining the reason for performing the connection establishment or the connection resumption with the base station by the relay device according to the connection-related information comprises:
determining the reason for performing the connection establishment or the connection resumption according to a reason in the connection request of the remote device indicated by the connection-related information.

8. The method as claimed in claim 7, wherein determining the reason for performing the connection establishment or the connection resumption with the base station by the relay device according to the connection-related information comprises:
determining the reason in the connection request of the remote device indicated by the connection-related information as the reason for performing by the relay device the connection establishment or the connection resumption.

9. The method as claimed in claim 1, wherein determining the reason for performing the connection establishment or the connection resumption with the base station by the relay device according to the connection-related information comprises:
determining a service type corresponding to the connection request of the remote device indicated by the connection-related information; and
determining the reason for performing the connection establishment or the connection resumption according to the service type.

10. The method as claimed in claim 1, wherein determining the reason for performing the connection establishment or the connection resumption with the base station by the relay device according to the connection-related information comprises:
determining that the reason for performing by the relay device the connection establishment or the connection resumption is relay.

11. The method as claimed in claim 10, wherein determining that the reason for performing by the relay device the connection establishment or the connection resumption is the relay comprises:
determining that the reason for performing by the relay device the connection establishment or the connection resumption is relay for the remote device.

12. The method as claimed in any one of claims 1 to 11, further comprising:
sending the reason to the base station while sending a connection establishment request or a connection resumption request to the base station.

13. A method for connection establishment, applicable to a remote device, the method comprising:
in response to communicating with a base station through a relay device, sending connection-related information to the relay device, wherein the connection-related information is configured to indicate a connection request of the remote device.

14. The method as claimed in claim 13, wherein sending the connection-related information to the relay device comprises:
in response to the relay device being in a non-connected state, sending the connection-related information to the relay device.

15. The method as claimed in claim 13, wherein the connection request comprises at least one of:
a connection establishment request, a connection re-establishment request or a connection resumption request.

16. An apparatus for connection establishment, applicable to a relay device, the apparatus comprising:
a reason determining module configured to, in response to receiving connection-related information of a remote device, determine a reason for performing a connection establishment or a connection resumption with a base station by the relay device according to the connection-related information, wherein the connection-related information is configured to indicate a connection request of the remote device.

17. An apparatus for connection establishment, applicable to a remote device, the apparatus comprising:
a reason sending module configured to, in response to communicating with a base station through a relay device, send connection-related information to the relay device, wherein the connection-related information is configured to indicate a connection request of the remote device.

18. An electronic device, comprising:
a processor; and
a memory for storing instructions executable by the processor;
wherein the processor is configured to perform the method for connection establishment of any one of claims 1 to 12 and/or the method for connection establishment of any one of 13 to 15.

19. A computer-readable storage medium having stored therein a computer program that, when executed by a processor, actions in the method for connection establishment of any one of claims 1 to 12 and/or in the method for connection establishment of any one of 13 to 15 are realized.
